(19) **Europäisches Patentamt**

**European Patent Office**

**Office européen des brevets**

(11) Publication number : **0 446 564 B1**

(12) # EUROPEAN PATENT SPECIFICATION

(45) Date of publication of patent specification :
27.07.94 Bulletin 94/30

(51) Int. Cl.⁵ : **C09D 9/00, D21C 5/02**

(21) Application number : **90830524.6**

(22) Date of filing : **14.11.90**

(54) **A deinking composition for water soluble flexographic printing inks.**

(30) Priority : **23.02.90 IT 335390**

(43) Date of publication of application :
**18.09.91 Bulletin 91/38**

(45) Publication of the grant of the patent :
**27.07.94 Bulletin 94/30**

(84) Designated Contracting States :
**AT BE CH DE DK ES FR GB GR LI NL SE**

(56) References cited :
**EP-A- 0 065 381**
**CH-A- 644 396**
**DATABASE WPI, no. 77-76 988 DERWENT**
**PUBLICATIONS LTD., London, GB; & JP-A-77**
**038 777**

(73) Proprietor : **DER S.r.l.**
**Via dell' Industria**
**I-40043 Marzabotto (Bologna) (IT)**

(72) Inventor : **Bortolomiol, Renzo**
**Via Ponteggio, 35**
**I-31049 Valdobbiadene (Treviso) (IT)**

(74) Representative : **Pederzini, Paolo**
**c/o BUGNION S.p.A.**
**Via dei Mille, 19**
**I-40121 Bologna (IT)**

EP 0 446 564 B1

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Jouve, 18, rue Saint-Denis, 75001 PARIS

## Description

The invention relates to a deinking composition by which inks of any type generally, and water soluble flexographic printing inks in particular, can be removed in a markedly efficient manner from fibres destined for recycling.

There is currently a growing development within the paper manufacturing industry of fibre recycling, an important technology that permits of ennobling and reclaiming waste material for reuse in new paper of high quality. The operation in question is brought about through a deinking process.

Deinking consists essentially in removing ink from a slurry of waste printed matter in such a way as to obtain white, clean fibres for the papermaking process.

Generally considered, the operation commences by reducing newspapers, magazines and other printed matter to pulp, with water; thereafter, the ink is removed from the wet fibres by applying chemical, mechanical and thermal energy. The ink binders are micronized and saponified generally using sodium hydroxide, sodium silicate, hydrogen peroxide and surface active detergents, whereupon application of heat causes the pigments to disperse in minute particles.

Following the initial pulping step, deinking can be brought about by one of two methods, namely washing or flotation.

Washing involves removal of the ink by the movement of water over screens, rotary filters or cleaners, tanks and presses. There are drawbacks with such a method however, inasmuch as large quantities of water are required, and therefore considerable resources for purification of the waste discharged. The fibre yield is particularly low, and whilst combined wash-and-flotation systems have been tried in certain instances, the results are far from satisfactory.

With the advent of flotation methods, it has become possible to obtain the separation of ink particles measuring 40 - 100 microns from fibres in suspension, and therefore to replace raw fibre with recycled fibre and avoid the consignment of reclaimable materials for maceration or destruction, or at best for the manufacture of low cost paper products.

Flotation thus permits a notable reduction in costs from the industrial point of view, and a strong ecological contribution to the conservation of natural resources, affording as it does a viable alternative to the procurement of fibre exclusively by cutting down trees.

Conceived originally as an industrial process for enriching low-grade ores, flotation exploits the surface tension of water, by virtue of which the exposed surface of the liquid can in certain cases form a thin, strong film able to support particles of any substance having a relative density higher than that of the liquid itself, provided that these are not wetted by the liquid.

Flotation thus utilizes the different wettabilities of the surfaces of materials requiring separation, whereby a more wettable material will sink, and a less wettable remains at the surface as if afloat. In practical application, the mineral is finely ground and introduced into a cell full of water, whereupon mineral oil or some other material not miscible with water is added as a flotation agent. The pulp thus produced is then aerated in order to generate a copious froth and enable the oil or other agent to enter into direct contact with the metallic particles of the mineral.

Separation occurs by virtue of the fact that a part of the material introduced is wettable to a low degree and thus will be held by the surface tension of the rising bubbles, whereas the remainder sinks to the bottom; accordingly, it suffices to skim off the froth in order to remove such noble material as is suspended in the aerated pulp. Notwithstanding its having been devised for the exploitation of low grade ores, which otherwise would never have been extractable, froth flotation has now been adapted to a much wider range of applications, one of which being the separation of ink from printed matter. Flexographic printing is a process utilizing liquid inks applied by relief rubber plates. The ink will be a dispersion of carbon black in mineral oil in most cases, and the solvent a mixture of water and alcohol. The success of flexographic printing is attributable above all to the fact that the fumes of classic ink solvents such as toluene, xylene and benzene are eliminated; in addition, the new inks dry in-process without giving off harmful vapours. A growing need to reclaim used paper has had the effect of focusing a great deal of attention on the problem of deinking. Whilst the relative process, to reiterate, consists simply in separating and distancing ink from the fibrous support of the used paper, new and as yet unresolved problems have been posed by the current adoption of water soluble inks -i.e. inks capable of dispersion in water. Standard chemical treatments, whether adopted in flotation or washing processes, have not produced any results worthy of note. Of the two processes mentioned, flotation is the more widely used, primarily since washing is only practicable with particle diameters of less than 25 microns, whereas flotation is not subject to such limitations.

With flexographic printing and water soluble inks, the problems in question are compounded further inasmuch as the ability of such inks to disperse in water leads to their spreading more easily through the recycle

EP 0 446 564 B1

system and darkening the treatment liquid; in effect, the ink particles fail to cling to the bubbles in an aerated pulp and thus render the flotation process impracticable, not to mention treatment of the water discharged as waste. Washing methods are precluded altogether with water soluble inks.

In the presence of so serious a difficulty, the development of this important technology has been inhibited in the paper manufacturing industry, and the search understandably continues apace for new substances having the ability to whiten recycled paper and remove ink thoroughly, without generating pollution.

By way of example, products marketed by the Henkel company under the brand names Olinor and Peratom consist essentially in oleic acid, or a blend of fatty acids, and fatty polyglycol ether alcohol. Such products require a water hardness of at least 5 °d in order to function, their operation being based on the use of calcium ions to bind the ink pigments, and are not suitable for water soluble inks.

It has now been discovered with some surprise that inks of any description can be treated and rendered swiftly and readily suitable for flotation using a composition of vegetable extracts mixed together in given proportions one with another. By exposing the surfaces of ink particles to the high capacity for aggregation and entrainment of these extracts, any type of ink, and in particular water solubles, can be floated easily and swiftly and the process water thus maintained free of any pollution attributable to the ink. The composition disclosed requires no special precautionary measures, being unaffected by any variation in pH-value, density or temperature; moreover, high degrees of efficiency are guaranteed as the surface active effect is highly selective, limited exclusively to the ink particles with no entrainment of fibrous material.

The effectiveness and wide scope of action afforded by the composition disclosed comfortably outstrip those encountered conventionally in flotation, and are such as to enable the separation of particles measuring <1 microns and >200 microns. The coagulative power of the composition enables a total elimination of ink in flotation and easy thickening thereafter during treatment of the waste.

Compositions according to the present invention are opalescent, easily pumped liquids. Being entirely natural, moreover, such liquids are better than 90% biodegradable and leave no pollutant residue in the waste process water. No modification is required whatever to the technology of existing flotation plant; also, the compositions are adaptable to any given type of flotation cell, and their powers of 'selective coagulation' enhance the efficiency of the centrifugal separators normally integrated into deinking process lines.

A deinking composition according to the present invention is effective in removing any given type of ink present in a slurry, and more especially in removing water soluble flexographic printing inks, and may comprise:

a) terpene extracts, anthocyanins, glucosides, sapogenins,
b) oils of leguminosae, phosphoprotides,
c) a monocarboxylic acid having from 3 to 10 carbon atoms and, optionally,
d) glycol ethers.

In a preferred composition according to the present invention, use is made of pine oil, comprising approximately 90% terpenic alcohols and 10% esters. By dictionary definition, pine oil is identifiable as "any of a group of volatile essential oils with pinaceous aromas distilled from cones, needles or stumps of various pine or other conifer species, and used as solvents, emulsifying agents, wetting agents, deodorants, germicides, and sources of chemicals"; such oils are indeed widely utilized in the manufacture of soaps and cosmetics and in the preparation of pharmaceuticals, by virtue of their refreshing, balsamic, and tonifying properties. Likewise according to the invention, a preferred oil of leguminosae would be soybean oil, which is used conventionally as an edible oil for condiments and in the manufacture of paints and varnishes. Preferred monocarboxylic acids are hydroxy acids, and in particular those with 3 to 10 carbon atoms. In a composition according to the invention, the acid is selected from the group comprising lactic, glyceric, tropic, salicylic, protocatechuic, gallic and similar acids, lactic acid being preferred. Glycol ethers are optional within the scope of the invention, their use being tied to a possible need for dilution of the product in water immediately prior to use; suitable glycol ethers are diethylene glycol dimethyl ether, diethylene glycol diethyl ether, ethylene glycol dimethyl ether, ethylene glycol diethyl ether, ethylene glycol monomethyl ether, ethylene glycol monoethyl ether, ethylene glycol monopropyl ether, ethylene glycol monobutyl ether, ethylene glycol monophenyl ether, diethylene glycol monomethyl ether, diethylene glycol monoethyl ether, diethylene glycol monopropyl ether, diethylene glycol monobutyl ether, triethylene glycol monomethyl ether, triethylene glycol monoethyl ether, triethylene glycol monopropyl ether, and triethylene glycol monobutyl ether.

It should be noted at this point that the terpene extracts, anthocyanins, glucosides and sapogenins are all capable of producing their deinking action alone, i.e. at 100%, though there may be special process requirements where a blend with others of the components mentioned becomes desirable. By way of example, a preferred deinking composition would comprise from 10 to 80% by weight terpene extracts, from 10 to 70% by weight (preferably 10-60%) oil of leguminosae, from 5 to 60% by weight (preferably 15-35%) monocarboxylic acid, with 3 to 10 carbon atoms, and from 1 to 40% by weight (preferably 2-30%) glycol ethers. By varying the percentage quantities of the single constituents, the composition can be adapted to any given technological situation that may be encountered.

Accordingly, a deinking composition according to the invention, suitable in particular for water soluble flexographic printing inks, comprises:

a) from 10 to 80% by weight terpene extracts, anthocyanins, glucosides sapogenins, singly or in any combination;

b) from 10 to 70% by weight (preferably 10-60%) oils of leguminosae or Phosphoprotides singly or in any combination;

c) from 5 to 60% by weight (preferably 15-35%) monocarboxylic acid, with 3 to 10 carbon atoms and optionally,

d) from 1 to 40% by weight (preferably 2-30%) glycol ethers.

When added to the slurry, the composition begins dragging the ink particles to the surface almost immediately, whereupon the foam generated can be skimmed off by conventional means (suction or mechanical).

A practical illustration will now be described by way of example, implying no limitation.

Three test runs were conducted, A, B and C, using the following respective starting materials: -

A: 100% newsprint (water soluble ink);

B: 50% newsprint as in (A)

+25% coated paper

+25% illustrated periodicals;

C: 50% coated paper

+50% magazines (uncoated paper, non-w/s ink)

The degree of whiteness was measured in each case with Photovolt equipment; results are given in the table overleaf.

Percentages are all by weight unless otherwise indicated.

Table

|  | RUN A | RUN B | RUN C |
|---|---|---|---|
| In pulper |  |  |  |
| Water temperature °C | 20 - 60 | 20 - 60 | 20 - 60 |
| Sodium silicate | 1.5% | 1.0% | 2.0% |
| Hydrogen peroxide (120 volumes) | 0.5% | 0.5% | 0.5% |
| Sodium Hydroxide | 1.0% | 1.0% | 0.5% |
| **Deinking composition** | 0.1% | 0.1% | 0.25% |
| Pulping time (min) | 10 - 30 | 10 - 30 | 10 - 30 |
| Dwell time (min) | 10 - 60 | 10 - 60 | 10 - 60 |
| Whiteness | 39.7% | 48.1% | 53.6% |
| In flotation |  |  |  |
| Dilution | 1.0-1.5% | 1.0-1.5% | 1.0-1.5% |
| Time (min) | 5 | 5 | 5 |
| **Deinking composition** | 0.8% | 0.5% | -- |
| Results post-flotation |  |  |  |
| Whiteness | 63.7% | 68.5% | 76.6% |
| Efficiency | 97% | 93% | 91% |

It will be seen from example C that a composition as disclosed is equally effective with traditional non water soluble inks.

A visual inspection of the treatment water was also effected, with the following results:

A) clear

B) off-white due to mineral content

C) opalescent due to mineral content.

## Claims

1. A composition capable of removing inks of any type, in particular water soluble flexographic printing inks, from paper destined for recycling, characterized in that it comprises:
   -a) from 10 to 80%, by weight terpene extracts, anthocyanins, glucosides, sapogenins, singly or in any combination;
   -b) from 10 to 70%, and preferably 10 to 60% by weight oils of leguminosae, phosphoprotides, singly or in any combination;
   -c) from 5 to 60%, and preferably 15 to 35% by weight monocarboxylic acid, with 3 to 10 carbon atoms;
   -d) optionally, from 1 to 40%, and preferably 2 to 30% by weight glycol ethers.

2. A deinking composition as in claim 1, comprising pine oil as component a).

3. A deinking composition as in claim 1, comprising soybean oil as component b).

4. A deinking composition as in claim 1, comprising a hydroxy acid with 3 to 10 carbon atoms selected from lactic acid, glyceric acid, tropic acid, salicylic acid, protocatechuic acid and gallic acid, preferably lactic acid, as component c).

5. A deinking composition as in claim 1, comprising:
   -a) from 10 tp 80%, by weight pine oil;
   -b) from 10 to 70%, and preferably 10 to 60% by weight soybean oil;
   -c) from 5 to 60%, and preferably 15 to 35% by weight lactic acid.

6. A deinking composition as in claim 1, comprising:
   -a) from 10 to 80%, by weight pine oil;
   -b) from 10 to 70%, and preferably 10 to 60% by weight soybean oil;
   -c) from 5 to 60%, and preferably 15 to 35% by weight lactic acid;
   -d) from 1 to 40%, and preferably 2 to 30% by weight glycol ethers.

7. A deinking composition as in claim 1, wherein the glycol ether of component d) is selected from diethylene glycol dimethyl ether, diethylene glycol diethyl ether, ethylene glycol dimethyl ether, ethylene glycol diethyl ether, ethylene glycol monomethyl ether, ethylene glycol monoethyl ether, ethylene glycol monopropyl ether, ethylene glycol monobutyl ether, ethylene glycol monophenyl ether, diethylene glycol monomethyl ether, diethylene glycol monoethyl ether, diethylene glycol mono propyl ether, diethylene glycol monobutyl ether, triethylene glycol monomethyl ether, triethylene glycol monoethyl ether, triethylene glycol mono propyl ether, triethylene glycol monobutyl ether.

8. The use of a deinking composition as defined in preceding claims for the removal of inks of any type from fibres destined for recycling, in particular of water soluble flexographic printing inks.

## Patentansprüche

1. Zusammensetzung zum Entfernen von Farben aller Art, insbesondere von wasserlöslichen Flexographiedruckfarben, von Papier, das zur Wiederaufbereitung bestimmt ist, **dadurch gekennzeichnet,** dass sie wie folgt enthält:
   -a) von 10 bis 80% in Gewicht an Terpenextrakten, Anthocyanen, Glucosiden, Sapogeninen, allein oder in jeder Art von Kombination;
   -b) von 10 bis 70%, vorzugsweise von 10 bis 60% in Gewicht an Leguminosenölen, Phosphorprotiden, einzeln oder in jeder Art von Kombination;
   -c) von 5 bis 60%, vorzugsweise von 15 bis 35% in Gewicht an Monokarbonsäure, mit 3 bis 10 Kohlenstoffatomen;
   -d) optional von 1 bis 40%, vorzugsweise von 2 bis 30% in Gewicht an Glykoläther.

2. Farbenentfernende Zusammensetzung nach Patentanspruch 1, enthaltend als Komponente a) Pinienöl.

**3.** Farbenentfernende Zusammensetzung nach Patentanspruch 1, enthaltend als Komponente b) Sojabohnenöl.

**4.** Farbenentfernende Zusammensetzung nach Patentanspruch 1, enthaltend Hydrxysäure mit 3 bis 10 Kohlenstoffatomen, gewählt aus Milschsäure, Glyzerinsäure, Tropinsäure, Salizylsäure, Protokatechusäure und Gallussäure, vorzugsweise Milchsäure als Komponente c).

**5.** Farbenentfernende Zusammensetzung nach Patentanspruch 1, enthaltend:
a) von 10 bis 80% in Gewicht an Pinienöl;
b) von 10 bis 70%, vorzugsweise von 10 bis 60% in Gewicht an Sojabohnenöl;
c) von 5 bis 60%, vorzugsweise von 15 bis 35% in Gewicht an Milchsäure.

**6.** Farbenentfernende Zusammensetzung nach Patentanspruch 1, enthaltend:
a) 10 bis 80% in Gewicht an Pinienöl;
b) von 10 bis 70%, vorzugsweise von 10 bis 60% in Gewicht an Sojabohnenöl;
c) von 5 bis 60%, vorzugsweise von 15 bis 35% in Gewicht an Milchsäure;
d) von 1 bis 40%, vorzugsweise von 2 bis 30% in Gewicht an Glykoläther.

**7.** Farbenentfernende Zusammensetzung nach Patentanspruch 1, in welcher der Glykoläther der Komponente d) gewählt ist aus Diäthylenglykoldimethyäther, Diäthylenglykoldiäthyläther, Äthylenglykoldimethyläther, Äthylenglykoldiäthyläther, Äthylenglykolmonomethyläther, Athylenglykolmonoäthylätller, Äthylenglykolmonopropyläther, Äthylenglykolmonobutyläther, Äthylenglykolmonophenyläther; Diäthylenglykolmonomethyläther, Diäthylenglykolmonoäthyläther, Diathylenglykolmonopropyläther, Diäthylenglykolmonobutyläther, Triäthylenmonomethyläther, Träthylenglykohmnoäthyläther, Triäthylenglykolmonopropyläther, Triäthylenglykohmonobutyläther.

**8.** Verwendung einer farbenentfernenden Zusammensetzung wie in den vorstehenden Ansprüchen zum Entfernen von Farben aller Art von Fasern, die zur Wiedergewinnung bestimmt sind, insbesondere von wasserlöslichen Flexographiedruckfarben.

## Revendications

**1.** Composition capable d'enlever les encres de tout genre, notamment les encres d'imprimerie flexographique solubles dans l'eau, du papier destiné au recyclage, caractérisée en ce qu'elle comporte:
a) 10 à 80% en poids d'extraits terpéniques, anthocyanes, glucosides, sapogénines, seuls ou en mélange;
b) 10 à 70%, et de préférence 10 à 60% en poids, d'huiles de légumineuses, phosphoprotides, seuls ou en mélange;
c) 5 à 60%, et de préférence 15 à 35% en poids, d'acide monocarboxylique, avec 3 à 10 atomes de carbone;
d) éventuellement, au choix, 1 à 40%, et de préférence 2 à 30% en poids, d'éthers glycoliques.

**2.** Composition de désencrage selon la revendication 1, comprenant de l'huile de soja en tant que composant a).

**3.** Composition de désencrage selon la revendication 1, comprenant de l'huile de soja en tant que composant b).

**4.** Composition de désencrage selon la revendication 1, comprenant en tant que composant c) un acide hydroxylique avec 3 à 10 atomes de carbone, choisi parmi le groupe comprenant l'acide lactique, l'acide glycérique, l'acide tropique (tropic acid), l'acide salicylique, l'acide protocatéchique et l'acide gallique, de préférence l'acide lactique.

**5.** Composition de désencrage selon la revendication 1, comprenant:
a) 10 à 80% en poids d'huile de pin;
b) 10 à 70%, et de préférence 10 à 60% en poids, d'huile de soja;
c) 5 à 60%, et de préférence 15 à 35% en poids, d'acide lactique.

6. Composition de désencrage selon la revendication 1, comprenant:
   a) 10 à 80% en poids d'huile de pin;
   b) 10 à 70%, et de préférence 10 à 60% en poids, d'huile de soja;
   c) 5 à 60%, et de préférence 15 à 35% en poids, d'acide lactique;
   d) 1 à 40%, et de préférence 2 à 30% en poids, d'éthers glycoliques.

7. Composition de désencrage selon la revendication 1, dans laquelle le composant d) est un éther glycolique choisi parmi le groupe comprenant: diméthyléther du glycol diéthylénique, diéthyléther du glycol diéthylénique, diméthyléther du glycol éthylénique, diéthyléther du glycol éthylénique, monométhyléther du glycol éthylénique, monoéthyléther du glycol éthylénique, monopropyléther du glycol éthylénique, monobutyléther du glycol éthylénique, monophényléther du glycol éthylénique, monométhyléther du glycol diéthylénique, monoéthyléther du glycol diéthylénique, monopropyléther du glycol diéthylénique, monobutyléther du glycol diéthylénique, monométhyléther du glycol triéthylénique, monoéthyléther du glycol triéthylénique, monopropyléther du glycol triéthylénique, monobutyéther du glycol triéthylénique.

8. Utilisation d'une composition comme définie dans les revendications précédentes pour éliminer les encres de tout genre des fibres destinées au recyclage, notamment les encres d'imprimerie flexographique solubles dans l'eau.